# EUROPEAN PATENT SPECIFICATION

(11) **EP 3 735 062 B1**
(45) Date of publication and mention of the grant of the patent: **24.01.2024**
(21) Application number: 17936046.6
(22) Date of filing: 27.12.2017
(51) Int. Cl.: H04W 72/04, H04W 52/02, H04L 5/00

(54) **USER TERMINAL AND RADIO COMMUNICATION METHOD**
BENUTZERENDGERÄT UND FUNKKOMMUNIKATIONSVERFAHREN
TERMINAL UTILISATEUR ET PROCÉDÉ DE RADIOCOMMUNICATION

(43) Date of publication of application: 04.11.2020
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2017/047136
(87) International publication number: WO 2019/130524

(56) References cited:
- WO-A1-2016/010001
- JP-A- 2012 526 473
- NTT DOCOMO ET AL: "Remaining details on PRACH formats", 3GPP DRAFT; R1-1721044_REMAINING DETAILS ON PRACH FORMATS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20171127 - 20171201 27 November 2017 (2017-11-27), XP051363805, Retrieved from the Internet: URL:http://www.3gpp.org/ftp/Meetings%5F3GP P%5FSYNC/RAN1/Docs/ [retrieved on 2017-11-27]
- NTT DOCOMO ET AL: "Remaining issues on other aspect of carrier aggregation", 3GPP DRAFT; R1-1720826, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20171127 - 20171201 18 November 2017 (2017-11-18), XP051370254, Retrieved from the Internet: URL:http://www.3gpp.org/ftp/tsg%5Fran/WG1% 5FRL1/TSGR1%5F91/Docs/ [retrieved on 2017-11-18]
- GUANGDONG OPPO MOBILE TELECOM: "Bandwidth part configuration and frequency resource allocation", 3GPP DRAFT; R1-1710164, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, P.R. China; 20170627 - 20170630 26 June 2017 (2017-06-26), XP051299388, Retrieved from the Internet: URL:http://www.3gpp.org/ftp/Meetings_3GPP_ SYNC/RAN1/Docs/ [retrieved on 2017-06-26]
- SPREADTRUM COMMUNICATIONS: "Remaining issues on UL/DL BWP configuration", 3GPP DRAFT; R1-1719698 REMAINING ISSUES ON UL BWP AND DL BWP CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG1, no. Reno, USA; 20171127 - 20171201 17 November 2017 (2017-11-17), XP051368855, Retrieved from the Internet: URL:http://www.3gpp.org/ftp/tsg%5Fran/WG1% 5FRL1/TSGR1%5F91/Docs/ [retrieved on 2017-11-17]
- INTEL AT&T HUAWEI HISILICON: "Way forward on further details of bandwidth part operation", 3GPP DRAFT; R1-1711788, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, P.R. China; 20170627 - 20170630 28 June 2017 (2017-06-28), XP051305974, Retrieved from the Internet: URL:http://www.3gpp.org/ftp/tsg_ran/WG1_RL 1/TSGR1_AH/NR_AH_1706/Docs/ [retrieved on 2017-06-28]
- INTEL et al.: "Way forward on futher details of bandwidth part operation", 3GPP TSG-RAN WG1 Ad-Hoc #2 Rl-1711788, vol. RAN WG1, 27 June 2017 (2017-06-27), XP051305974,
- MEDIATEK INC.: "Remaining details on bandwidth part operation in NR", 3GPP TSG RAN WG1 Meeting 91 R1- 1719551, vol. RAN WG1, 27 November 2017 (2017-11-27), XP051369365,
- SPREADTRUM COMMUNICATIONS: "Remaining issues on UL/DL BWP configuration", 3GPP TSG-RAN WG1#91 R1- 1719698, vol. RAN WG1, 17 November 2017 (2017-11-17), - 27 November 2017 (2017-11-27), XP051368855,

## Description

### Technical Field

The present invention relates to a user terminal and a radio communication method in next-generation mobile communication systems.

### Background Art

In UMTS (Universal Mobile Telecommunications System) networks, the specifications of Long Term Evolution (LTE) have been drafted for the purpose of further increasing high speed data rates, providing lower latency and so on (see Non-Patent Literature 1). Further, for the purpose of achieving a broader band and higher speed beyond LTE, succeeding systems of LTE (which are also referred to as, for example, LTE-A (LTE-Advanced), FRA (Future Radio Access), 4G, 5G, 5G+ (plus), NR (New RAT), LTE Rel. 14, Rel. 15 or later versions, and so on) have been studied.

In the existing LTE systems (for example, LTE Rel. 8 to Rel. 13), downlink (DL) and/or uplink (UL) communication is performed with a subframe of 1 ms being used as a scheduling unit. The subframe includes, for example, 14 symbols with a subcarrier spacing of 15 kHz in a case of a normal cyclic prefix (NCP). The subframe is also referred to as a transmission time interval (TTI) and so on.

A user terminal (UE (User Equipment)) controls reception of a DL data channel (also referred to as, for example, a PDSCH (Physical Downlink Shared Channel), a DL shared channel and so on), based on downlink control information (DCI) (also referred to as a DL assignment and so on) from a radio base station (for example, an eNB (eNodeB)). The user terminal also controls transmission of a UL data channel (also referred to as, for example, a PUSCH (Physical Uplink Shared Channel), a UL shared channel and so on), based on DCI (also referred to as a UL grant and so on) from the radio base station.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010.
Non-patent Literature 2 : NTT DOCOMO "Remaining details on PRACH formats",3GPP DRAFT; R1-1721044 (2017-11-27).

### Summary of Invention

The inventions is defined by the appended claims.

### Brief Description of Drawings

FIGS. 1A to 1C are each a diagram to illustrate an example of a scenario of configuration of BWP(s);
FIG. 2 is a diagram to illustrate an example of control of activation/deactivation of BWPs;
FIG. 3 is a diagram to illustrate an example of control of activation or deactivation of one or more BWPs in an SCell;
FIG. 4 is a diagram for describing control of activation/deactivation using an inactivity timer for each BWP in a plurality of activated BWPs;
FIG. 5 is a diagram for describing control of activation/deactivation using an inactivity timer common to BWPs in a plurality of activated BWPs;
FIG. 6 is a diagram to illustrate an example of a schematic structure of a radio communication system ;
FIG. 7 is a diagram to illustrate an example of an overall structure of a radio base station ;
FIG. 8 is a diagram to illustrate an example of a functional structure of the radio base station ;
FIG. 9 is a diagram to illustrate an example of an overall structure of a user terminal ;
FIG. 10 is a diagram to illustrate an example of a functional structure of the user terminal ;and
FIG. 11 is a diagram to illustrate an example of a hardware structure of the radio base station and the user terminal .

### Description of Embodiments

For future radio communication systems (for example, NR, 5G, or 5G+), allocation of a carrier (also referred to as a component carrier (CC), a cell, a system band, or the like) of a bandwidth (for example, 100 to 800 MHz) broader than that of the existing LTE systems (for example, LTE Rel. 8 to Rel. 13) has been studied.

At the same time, in the future radio communication systems, coexistence of a user terminal having capability of transmission and/or reception (transmission/reception) in the entire carrier (also referred to as a Wideband (WB) UE, a single carrier WB UE, and so on) and a user terminal not having capability of transmission/reception in the entire carrier (also referred to as a BW reduced UE and so on) is assumed.

As described above, for the future radio communication systems, coexistence of a plurality of user terminals supporting different bandwidths (various BW UE capabilities) is assumed, and thus semi-static configuration of one or more partial frequency bands in a carrier has been studied. Each frequency band (for example, 50 MHz, 200 MHz, or the like) in the carrier is also referred to as a partial band, a bandwidth part (BWP), or the like.

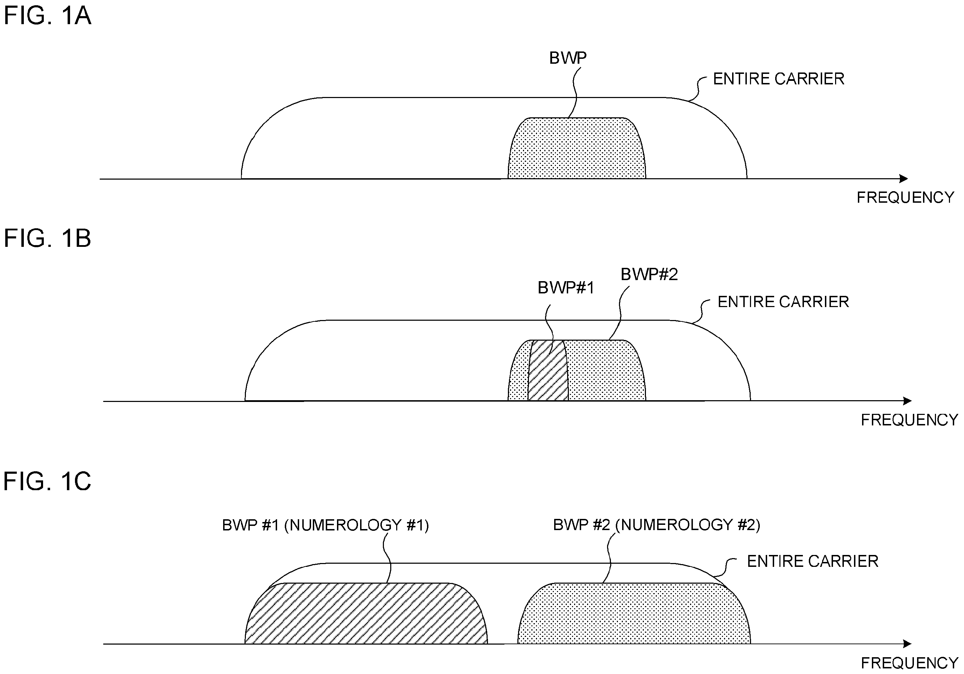

FIGS. 1A to 1C are each a diagram to illustrate an example of a scenario of configuration of BWP(s). FIG. 1A illustrates a scenario in which one BWP is configured for a user terminal in one carrier (Usage scenario #1). For example, in FIG. 1A, a BWP of 200 MHz is configured in a carrier of 800 MHz. Activation or deactivation of the BWP may be controlled.

Here, activation of a BWP refers to operation of making the BWP available (or operation of changing a state of the BWP to such an available state), and is also referred to as, for example, activation or enabling of configuration information (configuration) of a BWP (BWP configuration information). Further, deactivation of a BWP refers to operation of making the BWP unavailable (or operation of changing a state of the BWP to such an unavailable state), and is also referred to as, for example, deactivation or disenabling of BWP configuration information. When a BWP is scheduled, the BWP is activated.

FIG. 1B illustrates a scenario in which a plurality of BWPs are configured for the user terminal in one carrier (Usage scenario #2). As illustrated in FIG. 1B, at least a part of the plurality of BWPs (for example, BWPs #1 and #2) may overlap each other. For example, in FIG. 1B, BWP #1 is a partial frequency band of BWP #2.

Activation or deactivation of at least one of the plurality of BWPs may be controlled. The number of BWPs activated at given time may be limited (for example, only one BWP may be active at given time). For example, in FIG. 1B, only either BWP #1 or #2 is active at given time.

For example, in FIG. 1B, BWP #1 may be activated if transmission/reception of data is not performed, whereas BWP #2 may be activated if transmission/reception of data is performed. Specifically, switch from BWP #1 to BWP #2 may be performed if data to be transmitted/received is generated, whereas switch from BWP #2 to BWP #1 may be performed if transmission/reception of data ends. Consequently, the user terminal need not invariably monitor BWP #2 having a bandwidth broader than that of BWP #1. As a result, power consumption can be reduced.

Note that, in FIGS. 1A and 1B, a network (for example, a radio base station) need not assume that the user terminal performs reception and/or transmission outside of active BWPs. Note that, in FIG. 1A, operation in which the user terminal supporting the entire carrier receives and/or transmits signals outside of the BWP is by no means limited.

FIG. 1C illustrates a scenario in which a plurality of BWPs are configured in different bands in one carrier (Usage scenario #3). As illustrated in FIG. 1C, different numerologies may be applied to the plurality of BWPs. Here, the numerology may be at least one of a subcarrier spacing, a symbol length, a slot length, a cyclic prefix (CP) length, a slot (transmission time interval (TTI)) length, the number of symbols of each slot, and so on.

For example, in FIG. 1C, BWPs #1 and #2 with different numerologies are configured for the user terminal having capability of transmission/reception in the entire carrier. In FIG. 1C, at least one BWP configured for the user terminal may be activated or deactivated, and one or more BWPs may be active at given time.

Note that a BWP used for DL communication may be referred to as a DL BWP (frequency band for DL), and a BWP used for UL communication may be referred to as a UL BWP (frequency band for UL). At least a part of a frequency band of the DL BWP and the UL BWP may overlap each other. The DL BWP and the UL BWP are hereinafter collectively referred to as a BWP, unless they are distinguished from each other.

At least one DL BWP configured for the user terminal (for example, a DL BWP included in a primary CC) may include a control resource region, which is to be used as an allocation candidate of a DL control channel (DCI). The control resource region may be referred to as a control resource set (CORESET), a control subband, a search space set, a search space resource set, a control region, a controlling subband, an NR-PDCCH region, and so on.

The user terminal monitors one or more search spaces in a CORESET, and detects DCI for the user terminal. The search space may include a common search space (CSS) in which DCI (for example, group DCI or common DCI) common to one or more user terminals is allocated and/or a user terminal (UE)-specific search space (USS) in which DCI (for example, a DL assignment and/or a UL grant) specific to one user terminal is allocated.

The user terminal may receive configuration information of a CORESET (CORESET configuration information) by using higher layer signaling (for example, RRC (Radio Resource Control) signaling and so on). The CORESET configuration information may indicate at least one of frequency resources of each CORESET (for example, the number of RBs, a starting RB index, and/or the like), time resources (for example, a starting OFDM symbol number), duration, a REG (Resource Element Group) bundle size (REG size), a transmission type (for example, interleaving or non-interleaving), a cycle (for example, a monitoring cycle of each CORESET), and so on.

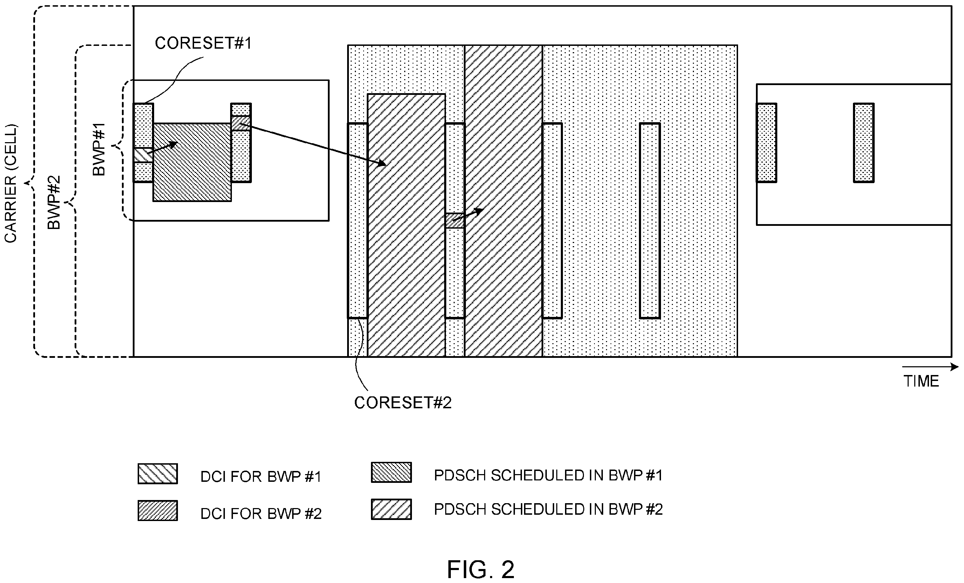

With reference to FIG. 2, control of activation and/or deactivation (also referred to as activation/deactivation, switching, determination, or the like) of BWPs will be described. FIG. 2 is a diagram to illustrate an example of control of activation/deactivation of BWPs. Note that FIG. 2 assumes the scenario illustrated in FIG. 1B. However, control of activation/deactivation of BWPs can also be applied to the scenarios illustrated in FIGS. 1A and 1C as appropriate, for example.

In FIG. 2, CORESET #1 is configured in BWP #1, and CORESET #2 is configured in BWP #2. One or more search spaces are provided in each of CORESET #1 and CORESET #2. For example, in CORESET #1, DCI for BWP #1 and DCI for BWP #2 may be mapped in the same search space, or may be mapped in different search spaces.

In FIG. 2, if BWP #1 is active, the user terminal monitors (performs blind decoding of) the search space in CORESET #1 in a given cycle (for example, once in every one or more slots, once in every one or more mini-slots, or once in every given number of symbols), and detects DCI for the user terminal.

The DCI may include information (BWP information) indicating correspondence between BWP and the DCI. The BWP information is, for example, an index of a BWP, and may be a given field value in DCI. The BWP index information may be included in DCI for scheduling in the downlink, may be included in DCI for scheduling in the uplink, or may be included in DCI of a common search space. Based on BWP information in DCI, the user terminal may determine a BWP in which a PDSCH or a PUSCH is scheduled using the DCI.

If the user terminal detects DCI for BWP #1 in CORESET #1, the user terminal receives a PDSCH scheduled (allocated) in a given time and/or frequency resource (time/frequency resource) in BWP #1, based on the DCI for BWP #1.

If the user terminal detects DCI for BWP #2 in CORESET #1, the user terminal deactivates BWP #1 and activates BWP #2. The user terminal receives a PDSCH scheduled in a given time/frequency resource of DL BWP #2, based on the DCI for BWP #2 detected in CORESET #1.

Note that, in FIG. 2, the DCI for BWP #1 and the DCI for BWP #2 are detected at different timings in CORESET #1. However, a plurality of pieces of DCI of different BWPs may be able to be detected at the same timing. For example, a plurality of search spaces corresponding to a plurality of respective BWPs may be provided in CORESET #1, and a plurality of pieces of DCI of different BWPs may be transmitted in the plurality of search spaces. The user terminal may monitor the plurality of search spaces in CORESET #1, and detect the plurality of pieces of DCI of different BWPs at the same timing.

When BWP #2 is activated, the user terminal monitors (performs blind decoding of) the search space in CORESET #2 in a given cycle (for example, once in every one or more slots, once in every one or more mini-slots, or once in every given number of symbols), and detects DCI for BWP #2. The user terminal may receive a PDSCH scheduled in a given time/frequency resource of BWP #2, based on the DCI for BWP #2 detected in CORESET #2.

Note that FIG. 2 illustrates a given time period for switching of activation or deactivation, but the given time period may not be set.

As illustrated in FIG. 2, when activation of BWP #2 is triggered by detection of DCI for BWP #2 in CORESET #1, BWP #2 can be activated without explicit indication information, and thus increase in overhead caused by the control of activation can be prevented.

In contrast, in FIG. 2, even if the user terminal misses in detection of DCI for BWP #2 (i.e., DCI for activation of BWP #2) in CORESET #1, the radio base station cannot recognize the missed detection. Thus, despite that the user terminal keeps monitoring CORESET #1 of BWP #1, the radio base station may erroneously recognize that the user terminal can use BWP #2, and may transmit DCI for scheduling a PDSCH in BWP #2 by using CORESET #2.

In this case, when the radio base station fails to receive transmission confirmation information (also referred to as a HARQ-ACK, an ACK/NACK, an A/N, or the like) of the PDSCH within a given period, the radio base station may recognize that the user terminal missed in detection of DCI for activation of BWP #2, and may retransmit DCI for activation by using CORESET #1. Alternatively, in FIG. 2, although not illustrated, a CORESET common to BWPs #1 and #2 may be provided.

If no data channels (for example, a PDSCH and/or a PUSCH) are scheduled for a given period in an activated BWP, the BWP may be deactivated. For example, in FIG. 2, no PDSCH is scheduled for a given period in DL BWP #2, and thus the user terminal deactivates BWP #2 and activates BWP #1.

The user terminal may configure a timer every time reception of a data channel (for example, a PDSCH and/or a PUSCH) completes in an activated BWP, and may deactivate the BWP when the timer expires. Regarding the timer, the same timer (also referred to as a joint timer and so on) may be used for the DL BWP and the UL BWP, or individual timers may be used for those BWPs.

If a timer is used for deactivation of a BWP, explicit deactivation indication information need not be transmitted, and thus overhead caused by control of deactivation can be reduced.

Incidentally, a maximum number of BWPs that can be configured for each carrier may be determined in advance. For example, in frequency division duplex (FDD) (Paired spectrum), for example, a maximum of four DL BWPs and a maximum of four UL BWPs may each be configured for each carrier.

In contrast, in time division duplex (TDD) (unpaired spectrum), a maximum of four pairs of a DL BWP and a UL BWP may be configured for each carrier. Note that, in TDD, a DL BWP and a UL BWP as a pair may have different bandwidths with the same center frequency.

The above description explains a case of a single carrier. However, a plurality of carriers (also referred to as cells, serving cells, and so on) may be integrated (for example, carrier aggregation (CA) and/or dual connectivity (DC)). As described above, one or more BWPs may be configured for at least one of the plurality of carriers.

If a plurality of cells are integrated by means of CA or DC, the plurality of cells may include a primary cell (PCell) and one or more secondary cells (SCells). The PCell may correspond to a single carrier (CC), and may include one or more BWPs. Further, each of the SCells may correspond to a single carrier (CC), and may include one or more BWPs.

In each BWP of the PCell, a common search space for a random access procedure (RACH (Random Access Channel Procedure)) may be provided. In a similar manner, in each BWP of the PCell, a common search space for fallback, a common search space for paging, or a common search space for RMSI (Remaining Minimum System Information) may be provided.

In each BWP of one or more cells (PCells and/or SCells), a common search space for a PDCCH (group-common PDCCH) that is common to one or more user terminals may be provided.

A specific BWP may be determined for the user terminal in advance. For example, a BWP (initial active BWP) for scheduling a PDSCH for transmitting system information (for example, RMSI (Remaining Minimum System Information)) may be defined by a frequency position or a bandwidth of a CORESET in which DCI for scheduling the PDSCH is mapped. The same numerology as the RMSI may be applied to the initial active BWP.

A default BWP may be determined for the user terminal in advance. The default BWP may be the initial active BWP mentioned above, or may be configured by using higher layer signaling (for example, RRC signaling).

Next, control of activation/deactivation of BWPs in an SCell will be described. Based on results of inter-frequency measurement in the user terminal, the radio base station configures an SCell for the user terminal, and configures one or more BWPs in the SCell.

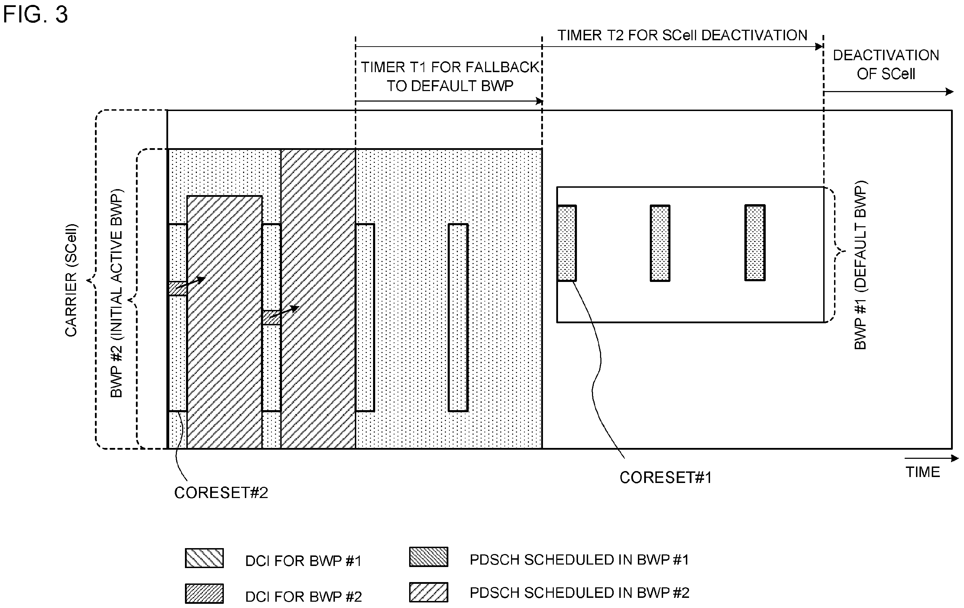

FIG. 3 is a diagram to illustrate an example of control of activation or deactivation of one or more BWPs in an SCell. In FIG. 3, BWPs #1 and #2 in the SCell are configured for the user terminal. However, this is merely an example, and the present invention is not limited to this example.

As illustrated in FIG. 3, in the SCell, a BWP having the broader bandwidth out of a plurality of BWPs configured for the user terminal may be configured as an initial active BWP. The initial active BWP may be reported from the radio base station to the user terminal by using higher layer signaling (for example, RRC signaling).

For example, in FIG. 3, BWP #2 having a bandwidth broader than that of BWP #1 may be configured for (reported to) the user terminal as an initial active BWP. In FIG. 3, BWP #1 different from the initial active BWP is configured for (reported to) the user terminal as a default BWP. However, an initial active BWP and a default BWP may be configured as the same BWP.

For example, in FIG. 3, the user terminal may start a timer T1 for switching (fallback) to a default BWP and a timer T2 for deactivation of an SCell every time reception of a PDSCH completes in BWP #2. For example, a period of the timer T2 is configured to be longer than a period of the timer T1.

In FIG. 3, the user terminal monitors (performs blind decoding of) a search space in CORESET #2 of BWP #2 in a given cycle even after the start of the timers T1 and T2, but the timer T1 expires before the user terminal detects DCI. When the timer T1 expires, the user terminal deactivates BWP #2 being an initial active BWP, and activates BWP #1 being a default BWP.

The user terminal monitors (performs blind decoding of) a search space in CORESET #1 of the activated BWP #1 in a given cycle, but the timer T2 expires before the user terminal detects DCI. When the timer T2 expires, all the BWPs are deactivated, and the SCell is deactivated.

As described above, when all the BWPs in the SCell are deactivated and the SCell is implicitly deactivated, signaling overhead for deactivation of the SCell can be reduced.

In contrast, in one carrier (cell), even if a plurality of BWPs are configured, a maximum number of activated BWPs is assumed to be one. This is true for both the downlink and the uplink.

It is considered preferable that a plurality of BWPs be activated at the same time in one carrier (cell) in the future. For example, it is considered that it may be preferable for a plurality of BWPs to be activated at the same time when communication is performed with multiplexing on the same user with different numerologies in the MBB (Mobile Broad Band) service.

In view of the above, the inventors of the present application focused on a configuration in which DL/UL communication is performed using at least two activated BWPs, and arrived at the present invention. The inventors of the present application also arrived at a method of controlling activation/deactivation of a plurality of configured BWPs when DL/UL communication using at least two activated BWPs is performed. To perform activation/deactivation of BWPs, for example, the inventors of the present application came up with the idea of application of control based on a time period elapsed from completion of use of a data channel in an activated BWP (use of an inactivity timer), control of switching to a default (or initial) BWP (fallback control), pairing control of BWPs between the DL and the UL, or control achieved by combining two or more types of the control mentioned above.

One embodiment of the present invention will be described below with reference to the drawings. Note that, in the aspects described below, two BWPs are configured. However, the number of configured BWPs is not limited to this.

### (First Aspect)

First, as a first aspect, control of activation/deactivation of BWPs using an inactivity timer will be described. The inactivity timer is configured for each serving cell/carrier.

The inactivity timer refers to a timer for measuring the elapse of time from completion of use of a data channel in an activated BWP. For example, in downlink communication, a timer may be started based on completion of reception of a data channel (for example, a PDSCH). In uplink communication, a timer may be started based on completion of transmission of a data channel (for example, a PUSCH).

Control to be described later is performed after the elapse of a given time period configured in an inactivity timer. The given time period (predeterined time period, preconfigured period) configured in an inactivity timer may be semi-statically configured by using higher layer signaling (for example, RRC) from the radio base station. The given time period may be dynamically configured by using downlink control information (for example, DCI) addressed to the user terminal. Alternatively, the given time period may be configured in advance in a to a user terminal-specific manner.

In the first aspect, three types of control of the following options 1-1 to 1-3 can be performed. Note that the control of options 1-1 to 1-3 may be performed individually for each user terminal, or may be performed individually for each cell/carrier.

### <Option 1-1: Timer Configuration for Each Active BWP>

In option 1-1, an inactivity timer is configured for each activated BWP. For example, if there is one activated BWP, one inactivity timer corresponding to the BWP is configured. If there are a plurality of activated BWPs (such as in a case where one BWP is of 15 kHz and another BWP is of 60 kHz), an inactivity timer is configured for each of those BWPs.

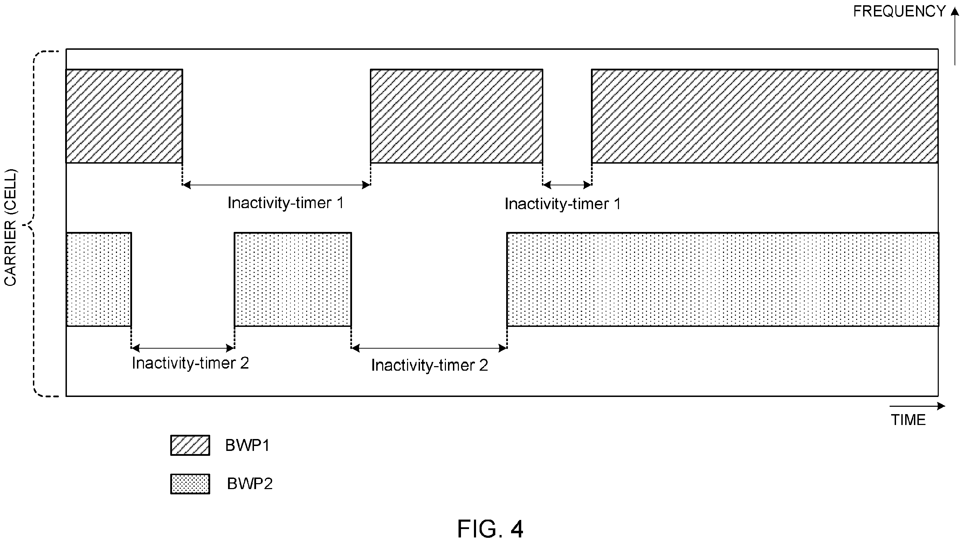

In FIG. 4, inactivity timer 1 is configured for BWP 1, and inactivity timer 2 is configured for BWP 2. In FIG. 4, time periods during which inactivity timers 1 and 2 perform timer count are indicated by arrows. In FIG. 4, a corresponding BWP is scheduled before expiration of a given time period of each timer.

A configured inactivity timer measures the elapse of time from completion of use (completion of transmission or reception) of a data channel in an activated BWP. If a BWP is scheduled after the start of measurement and before the elapse (expiration) of a given time period, the measurement of the inactivity timer is stopped, and the measured time is reset.

If no BWPs are scheduled after the start of measurement and before the elapse of a given time period (if the given time period of the inactivity timer expires), a corresponding BWP is deactivated (the user terminal deactivates a corresponding BWP).

### <Option 1-1a:>

In option 1-1a, in comparison with default option 1-1, control of activation/deactivation of a default BWP (initial BWP) is separately performed from other BWPs. Note that, in option 1-1a, an inactivity timer is configured for each activated BWP in a similar manner to option 1-1 described above. If there are a plurality of activated BWPs, an inactivity timer is configured for each of those BWPs.

The initial BWP is defined in a frequency bandwidth that is used when the user terminal performs initial access (for example, synchronization processing or the like). For example, the initial BWP is defined in a bandwidth of a PDCCH or a CORESET in which initial access is performed.

The default BWP refers to a BWP specified by default in advance. The default BWP may be semi-statically configured by using higher layer signaling (for example, RRC) from the radio base station (network) after initial access. If the default BWP is not configured by the network after initial access, the user terminal configures the initial BWP as the default BWP.

The default BWP may be dynamically configured or changed by using downlink control information (for example, DCI) addressed to the user terminal. The default BWP may be individually configured for each user terminal or for each group including a plurality of user terminals, or may be configured for each cell or carrier.

If an activated BWP is not a default BWP (which is the same BWP as the initial BWP in some cases) and no BWPs are scheduled after the start of measurement and before the elapse of a given time period, a corresponding BWP is deactivated (the user terminal deactivates a corresponding BWP).

In option 1-1a, in comparison with default option 1-1, a default BWP and an initial BWP can be controlled separately from other BWPs.

If an activated BWP is a default BWP and no activated BWPs are scheduled before the time period of a corresponding inactivity timer exceeds a given time period, the default BWP may be deactivated.

If a default BWP is deactivated, activated BWPs other than the default BWP may be deactivated as well. In this manner, all of the plurality of BWPs configured for the user terminal may be deactivated. For example, if a default BWP is deactivated, control of deactivation may be performed on the assumption that other BWPs need not be kept activated.

The above configuration allows for reduction of power consumed in the user terminal to monitor BWPs, for example. Specifically, the above configuration allows the user terminal to perform intermittent reception control, i.e., so-called DRX (Discontinuous Reception) control. In this case, a DRX inactivity timer may be used as an inactivity timer for the default BWP. Alternatively, a DRX inactivity timer and an inactivity timer for a default BWP may be used at the same time. For example, different expiration times may be configured for individual timers.

Note that different given time periods may be configured for inactivity timers of a default BWP and other BWPs.

### <Option 1-1b>

In option 1-1b, no corresponding inactivity timer is configured for a default BWP. In other words, a default BWP is invariably activated.

An inactivity timer is configured for BWPs other than a default BWP. Accordingly, control for BWPs other than a default BWP may be the same as the control of option 1-1 described above.

If no default BWPs are configured, an initial BWP may be invariably activated. Alternatively, even if a default BWP is configured, an initial BWP may be invariably activated, and an inactivity timer may be provided for the default BWP. If a default BWP and an initial BWP indicate different BWPs, both the BWPs may be invariably activated.

### <Option 1-2: Timer Configuration for Each Cell/Carrier>

In option 1-2, an inactivity timer is configured for each serving cell/carrier. If a plurality of BWPs are activated, a common inactivity timer is configured for those BWPs.

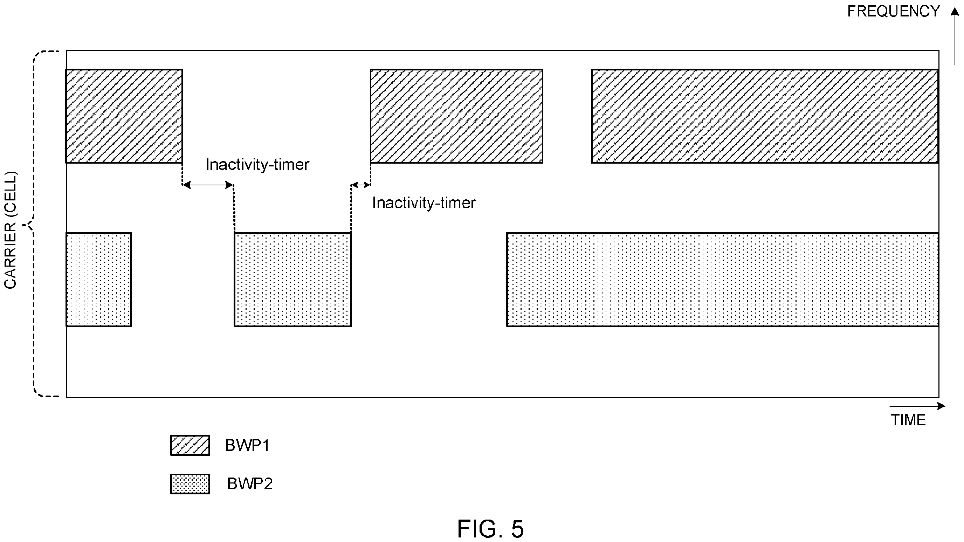

In FIG. 5, a common inactivity timer is configured for BWPs 1 and 2. The common inactivity timer measures (counts) time during which no data channel of BWP 1 or 2 is used. In FIG. 5, time periods during which the inactivity timer performs timer count is indicated by arrows. In FIG. 5, either BWP 1 or 2 is scheduled before expiration of a given time period.

If none of the plurality of BWPs activated before the time period of the common inactivity timer exceeds a given time period is scheduled, the plurality of activated BWPs are deactivated. In this manner, all of the plurality of activated BWPs are deactivated.

Note that, regarding the plurality of activated BWPs, if none of the BWPs is scheduled before the elapse of a given time period, the plurality of BWPs may be deactivated.

### <Option 1-3: Grouping of BWPs>

In option 1-3, BWPs are grouped to define BWP groups, and an inactivity timer is configured for each BWP group. The grouping of BWPs may be grouping of a plurality of BWPs configured for the user terminal. Alternatively, the grouping may be grouping of a plurality of BWPs configured in a cell or a carrier.

The BWP group mentioned above may be, for example, handled as a TAG (Tmiming Advanced Group) inactivity timer.

According to the first aspect described above, DL/UL communication using at least two activated BWPs is performed, and communication efficiency can be enhanced. In addition, by using an inactivity timer, activation/deactivation of a plurality of configured BWPs can be appropriately controlled. As a result, throughput of radio communication can be enhanced. Owing to such appropriate deactivation control, power consumed in the user terminal can be reduced.

Note that the above first aspect describes a case of downlink communication. However, the present invention is not limited to being applied to the downlink. For example, each of the above options may be applied to uplink communication.

The user terminal may receive a time period (given time period, expiration time) configured for a timer from the network by using higher layer signaling or downlink control signaling addressed to the user terminal. Such information may be an index specifying one of a plurality of time periods configured for the user terminal in advance.

### (Second Aspect)

Next, a second aspect of the present invention will be described. In the second aspect, control of activation/deactivation of a plurality of configured BWPs is performed when a default BWP is configured and communication using at least two activated BWPs is performed. Configuration/operation of the default BWP will be described below. Note that, in the second aspect, control of the following options 2-1 and 2-2 is performed. Note that each type of control may be performed individually for each user terminal, or may be performed individually for each cell/carrier.

### <Option 2-1: Configuration of Single Default BWP>

In option 2-1, one default BWP is configured in advance for each given serving cell/carrier. If a given time period of inactivity timers corresponding to all of the activated BWPs expires, the user terminal switches the activated BWPs to a default BWP.

Specifically, if the activated BWPs do not include a default BWP, the user terminal deactivates all the activated BWPs, and activates a deactivated default BWP. In contrast, if the activated BWPs include a default BWP, BWPs other than the default BWP are deactivated.

### <Option 2-2: Configuration of Plurality of Default BWPs>

In option 2-2, a plurality of default BWPs are configured in advance for each given serving cell/carrier. Each of the plurality of BWPs configured for the user terminal is associated (linked) with any one of the plurality of default BWPs.

If a given time period of inactivity timers corresponding to the activated BWPs expires, the user terminal switches the activated BWP to a corresponding default BWP. Specifically, the activated BWPs are deactivated, and a deactivated corresponding default BWP is activated. As a result, the user terminal can continue activation of a plurality of BWPs.

Note that a plurality of BWPs configured for the user terminal and a plurality of default BWPs may be associated on a one-to-one basis. In combination with BWP grouping in <Option 1-3> described above, one default BWP may be associated with each BWP group.

According to the second aspect described above, DL/UL communication using at least two activated BWPs is performed, and communication efficiency can be enhanced. In addition, by configuring one or a plurality of default BWPs for each serving cell/carrier in advance, activation/deactivation of the plurality of configured BWPs can be appropriately controlled. As a result, throughput of radio communication can be enhanced. Further, owing to such appropriate deactivation control, the user terminal only needs to monitor a minimum necessary number of BWPs, and can thus reduce power consumption.

Note that the above second aspect describes a case of downlink communication. However, the present invention is not limited to being applied to the downlink. For example, each of the above options may be applied to uplink communication.

The user terminal receives information indicating correspondence between a plurality of configured BWPs and one or a plurality of default BWPs (or initial BWPs) from the network by using higher layer signaling or downlink control signaling addressed to the user terminal. Such information may be an index specifying one of a plurality of correspondences configured for the user terminal in advance.

### (Third Aspect)

Next, a third aspect will be described. In the third aspect, pairing between an uplink BWP (hereinafter a "UL BWP") and a downlink BWP (hereinafter a "DL BWP") is defined for each serving cell/carrier. Further, activation/deactivation of a plurality of configured BWPs is controlled based on the pairing when communication using at least two activated BWPs is performed.

Configuration/operation of the UL/DL BWP will be described below. Note that, in the third aspect, control of the following options 3-1 to 3-3 is performed. Note that each type of control may be performed individually for each user terminal, or may be performed individually for each cell/carrier.

### <Option 3-1:>

In option 3-1, a plurality of DL BWPs and a plurality of UL BWPs are paired on a one-to-one basis. In this case, if a plurality of DL BWPs are activated, the user terminal needs to activate a plurality of UL BWPs corresponding to those DL BWPs. In this manner, communication is performed by using a plurality of BWPs in both the downlink and the uplink.

If a PDSCH associated with a DL BWP is scheduled, the user terminal transmits a HARQ-ACK by using a UL BWP paired with the DL BWP. If a PUSCH associated with a UL BWP is scheduled, a UL grant is transmitted to the user terminal by using a DL BWP paired with the UL BWP.

### <Option 3-1a>

In option 3-1a, different pairing from that in the case of <Option 3-1> described above is used. Specifically, one UL BWP is paired with a plurality of DL BWPs.

If a plurality of PDSCHs corresponding to a plurality of DL BWPs are scheduled, HARQ-ACKs of the plurality of PDSCHs are multiplexed on a PUCCH/PUSCH of one paired UL BWP.

### <Option 3-1b>

In option 3-1b, a plurality of UL BWPs are paired with a plurality of DL BWPs. Here, if a plurality of PDSCHs corresponding to a plurality of DL BWPs are scheduled, HARQ-ACKs of the plurality of PDSCHs are multiplexed on PUCCHs/PUSCHs of a plurality of corresponding UL BWPs.

### <Option 3-2>

In option 3-2, the same pairing as that in the case of <Option 3-1a> described above is assumed. Note that, here, only one UL BWP paired with a plurality of DL BWPs activated in the downlink is activated in the uplink. In this manner, even if a plurality of BWPs are activated in the downlink, the user terminal only needs to activate only one BWP in the uplink.

Thus, if a plurality of PDSCHs corresponding to a plurality of DL BWPs are scheduled, HARQ-ACKs of the plurality of PDSCHs are multiplexed on one PUCCH/PUSCH of a UL BWP that is a paired UL BWP and that is the only UL BWP activated in the uplink.

### <Option 3-3>

In option 3-3, the same pairing as that in the case of <Option 3-1b> described above is assumed. Note that, here, only one DL BWP is activated in the downlink. In contrast, in the uplink, a plurality of UL BWPs paired with the DL BWP are activated.

Thus, if a PDSCH corresponding to the only activated DL BWP is scheduled, a HARQ-ACK of the PDSCH is multiplexed on a plurality of UL BWPs that are paired UL BWPs. Note that UL BWPs other than the only UL BWP activated in the uplink are used in a supplementary uplink (SUL).

In the supplementary uplink, a carrier performing only uplink transmission is supported. In the supplementary uplink, two uplinks are configured for the user terminal so that one downlink is performed in the same cell.

According to the third aspect described above, DL/UL communication using at least two activated BWPs is performed, and communication efficiency can be enhanced. In addition, by performing pairing between an uplink BWP and a downlink BWP, the uplink and the downlink can be associated with each other, and activation/deactivation of a plurality of configured BWPs can be appropriately controlled. As a result, throughput of radio communication can be enhanced.

Further, the user terminal may receive information indicating pairing between a DL BWP and a UL BWP from the network by using higher layer signaling or downlink control signaling addressed to the user terminal. Such information may be an index specifying one of a plurality of pairings configured for the user terminal in advance.

### (Radio Communication System)

Hereinafter, a structure of a radio communication system will be described. In the radio communication system, the radio communication method according to each of the above aspects is applied. Note that the radio communication method according to each of the above aspects may be employed independently or may be employed in combination.

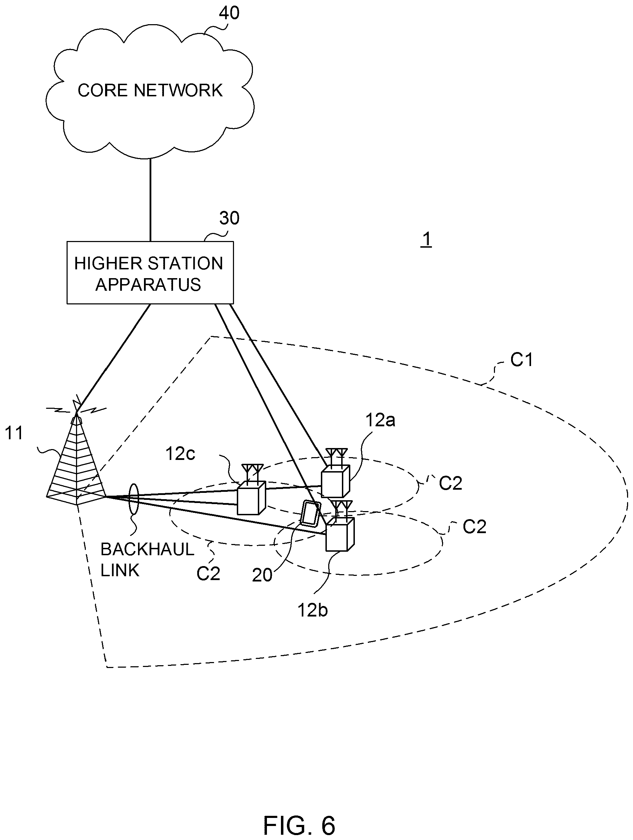

FIG. 6 is a diagram to illustrate an example of a schematic structure of the radio communication system. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit. Note that the radio communication system 1 may be referred to as SUPER 3G, LTE-A (LTE-Advanced), IMT-Advanced, 4G, 5G, FRA (Future Radio Access), NR (New RAT), and so on.

The radio communication system 1 illustrated in FIG. 6 includes a radio base station 11 that forms a macro cell C1, and radio base stations 12a to 12c that form small cells C2, which are placed within the macro cell C1 and which are narrower than the macro cell C1. Also, user terminals 20 are placed in the macro cell C1 and in each small cell C2. Different numerologies may be applied to different cells. Note that the numerology may be at least one of a subcarrier spacing, a symbol length, a cyclic prefix (CP) length, the number of symbols in each transmission time interval (TTI), and a time length of a TTI. Furthermore, a slot may be a time unit based on a numerology used by the user terminal. The number of symbols of each slot may be determined according to a subcarrier spacing.

The user terminals 20 can connect with both the radio base station 11 and the radio base stations 12. It is assumed that the user terminals 20 use the macro cell C1 and the small cells C2 using different frequencies at the same time by means of CA or DC. The user terminals 20 can adopt CA or DC by using a plurality of cells (CCs) (for example, two or more CCs). The user terminal can use a licensed band CC and an unlicensed band CC as the plurality of cells.

The user terminals 20 can perform communication by using time division duplex (TDD) or frequency division duplex (FDD) in each cell (carrier). A cell of TDD and a cell of FDD may be respectively referred to as a TDD carrier (second type of frame configuration) and an FDD carrier (first type of frame configuration), for example.

In each cell (carrier), a slot having a relatively long time length (for example, 1 ms) (also referred to as a TTI, a normal TTI, a long TTI, a normal subframe, a long subframe, a subframe, or the like) and/or a slot having a relatively short time length (also referred to as a mini-slot, a short TTI, a short subframe, or the like) may be applied. In each cell, slots having two or more time lengths may be applied.

Between the user terminals 20 and the radio base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz, 30 to 70 GHz, and so on) and a wide bandwidth may be used, or the same carrier as that used between the user terminals 20 and the radio base station 11 may be used. Note that the structure of the frequency band for use in each radio base station is by no means limited to these. Further, for the user terminal 20, one or more BWPs may be configured. Each BWP includes at least a part of a carrier.

A wired connection (for example, means in compliance with the CPRI (Common Public Radio Interface) such as an optical fiber, an X2 interface and so on) or a wireless connection may be established between the radio base station 11 and the radio base stations 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. The radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the radio base stations 11 and 12 will be collectively referred to as "radio base stations 10," unless specified otherwise.

Each of the user terminals 20 is a terminal that supports various communication schemes such as LTE and LTE-A, and may include not only mobile communication terminals but stationary communication terminals. The user terminal 20 can perform terminal-to-terminal communication (D2D) with other user terminals 20.

In the radio communication system 1, as radio access schemes, OFDMA (orthogonal frequency division multiple access) can be applied in the downlink (DL), and SC-FDMA (single carrier frequency division multiple access) can be applied in the uplink (UL). OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and OFDMA may be used in the UL. SC-FDMA can be applied to the sidelink (SL) used for terminal-to-terminal communication.

In the radio communication system 1, a DL data channel (PDSCH (Physical Downlink Shared Channel), which is also referred to as a DL shared channel and so on) which is used by each user terminal 20 on a shared basis, a broadcast channel (PBCH (Physical Broadcast Channel)), L1/L2 control channels and so on are used as DL channels. DL data (at least one of user data, higher layer control information, SIBs (System Information Blocks) and so on) is communicated on the PDSCH. The MIBs (Master Information Blocks) are communicated on the PBCH.

The L1/L2 control channels include a DL control channel (a PDCCH (Physical Downlink Control Channel) and/or an EPDCCH (Enhanced Physical Downlink Control Channel)), a PCFICH (Physical Control Format Indicator Channel), a PHICH (Physical Hybrid-ARQ Indicator Channel) and so on. Downlink control information (DCI), including PDSCH and PUSCH scheduling information, and so on are communicated on the PDCCH. The number of OFDM symbols to use for the PDCCH is communicated on the PCFICH. The EPDCCH is frequency-division multiplexed with the PDSCH and used to communicate DCI and so on, like the PDCCH. Transmission confirmation information (also referred to as an A/N, a HARQ-ACK, a HARQ-ACK bit, an A/N codebook, or the like) of the PUSCH can be communicated on the PHICH.

In the radio communication system 1, a UL data channel (PUSCH (Physical Uplink Shared Channel), which is also referred to as a UL shared channel and so on), which is used by each user terminal 20 on a shared basis, a UL control channel (PUCCH (Physical Uplink Control Channel)), a random access channel (PRACH (Physical Random Access Channel)) and so on are used as UL channels. UL data (user data and/or higher layer control information) is communicated on the PUSCH. Uplink control information (UCI) including at least one of transmission confirmation information (A/N or HARQ-ACK) channel state information (CSI) of the PDSCH and so on is communicated on the PUSCH or the PUCCH. By means of the PRACH, random access preambles for establishing connections with cells can be communicated.

### <Radio Base Station>

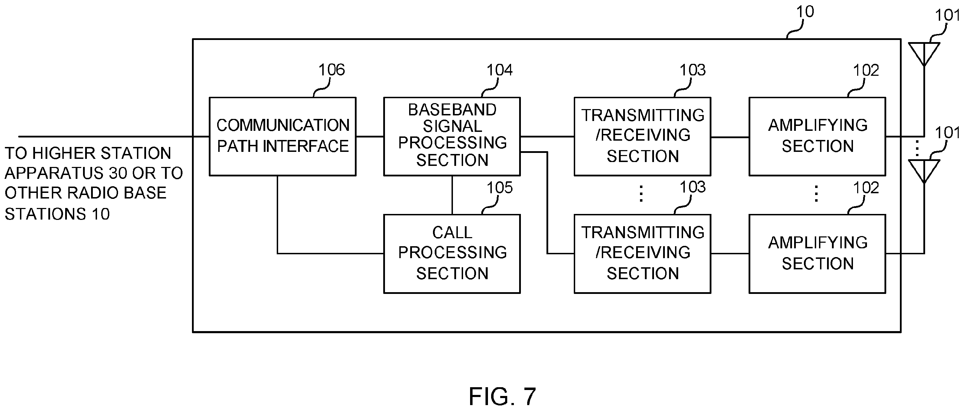

FIG. 7 is a diagram to illustrate an example of an overall structure of the radio base station. A radio base station 10 includes a plurality of transmitting/receiving antennas 101, amplifying sections 102, transmitting/receiving sections 103, a baseband signal processing section 104, a call processing section 105 and a transmission line interface 106. Note that the radio base station 10 may be configured to include one or more transmitting/receiving antennas 101, one or more amplifying sections 102 and one or more transmitting/receiving sections 103. The radio base station 10 may constitute a "receiving apparatus" in the UL, and may constitute a "transmitting apparatus" in the DL.

User data to be transmitted from the radio base station 10 to the user terminal 20 by the downlink is input from the higher station apparatus 30 to the baseband signal processing section 104, via the transmission line interface 106.

In the baseband signal processing section 104, the user data is subjected to a transmission process of at least one of a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) process), scheduling, transport format selection, channel coding, rate matching, scrambling, an inverse fast Fourier transform (IFFT) process, and a precoding process, and so on, and the result is forwarded to each transmitting/receiving section 103. Furthermore, downlink control signals are also subjected to transmission processes such as channel coding and/or inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101.

It is possible to adopt constitution with transmitters/receivers, transmitting/receiving circuits or transmitting/receiving apparatus that can be described based on general understanding of the technical field to which the present invention pertains. Note that each transmitting/receiving section 103 may be structured as a transmitting/receiving section in one entity, or may be constituted with a transmitting section and a receiving section.

Meanwhile, as for UL signals, radio frequency signals that are received in the transmitting/receiving antennas 101 are amplified in the amplifying sections 102. The transmitting/receiving sections 103 receive the UL signals amplified in the amplifying sections 102. The transmitting/receiving sections 103 convert the received signals into the baseband signal through frequency conversion and outputs to the baseband signal processing section 104.

In the baseband signal processing section 104, UL data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the transmission line interface 106. The call processing section 105 performs at least one of call processing such as setting up and releasing for communication channels, management of the state of the radio base station 10, and management of the radio resources.

The transmission line interface 106 transmits and/or receives signals to and/or from the higher station apparatus 30 via a given interface. The transmission line interface 106 may transmit and/or receive signals (backhaul signaling) with neighboring radio base stations 10 via an inter-base station interface (for example, an optical fiber in compliance with the CPRI (Common Public Radio Interface) and an X2 interface).

The transmitting/receiving sections 103 transmit a DL signal (for example, at least one of a DL control signal (also referred to as a DL control channel, DCI, or the like), a DL data signal (also referred to as a DL data channel, DL data, or the like), and a reference signal). The transmitting/receiving sections 103 receive a UL signal (for example, at least one of a UL control signal (also referred to as a UL control channel, UCI, or the like), a UL data signal (also referred to as a UL data channel, UL data, or the like), and a reference signal).

The transmitting/receiving sections 103 may transmit higher layer control information (for example, control information carried on MAC CEs and/or RRC signaling).

The transmitting/receiving sections 103 may perform DL/UL communication by using at least two activated BWPs.

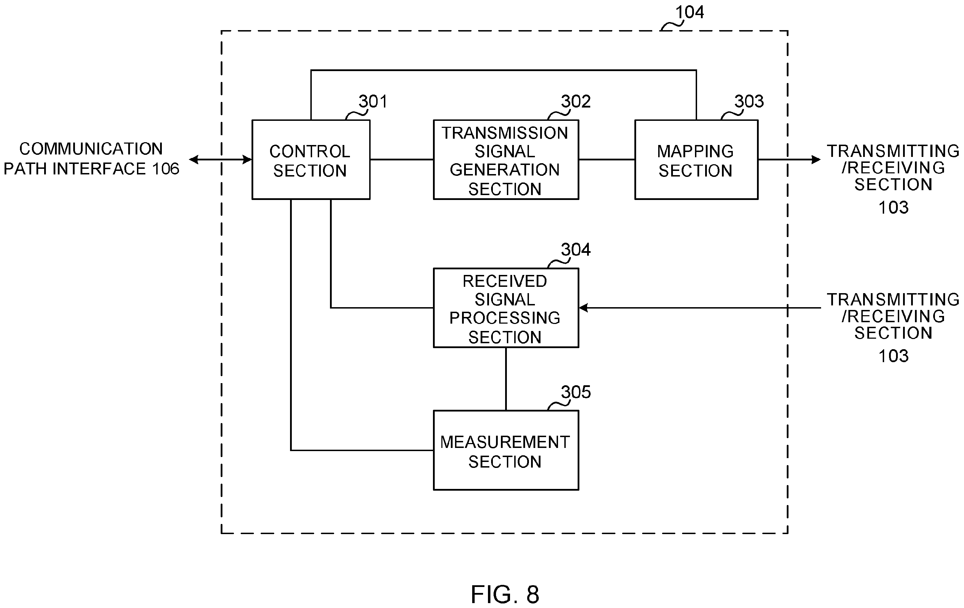

FIG. 8 is a diagram to illustrate an example of a functional structure of the radio base station. Note that FIG. 8 primarily illustrates functional blocks and it is assumed that the radio base station 10 may include other functional blocks that are necessary for radio communication as well. As illustrated in FIG. 8, the baseband signal processing section 104 includes a control section 301, a transmission signal generation section 302, a mapping section 303, a received signal processing section 304, and a measurement section 305.

The control section 301 controls the whole of the radio base station 10. The control section 301 controls, for example, at least one of generation of a DL signal performed by the transmission signal generation section 302, mapping of a DL signal performed by the mapping section 303, receiving processes (for example, demodulation and so on) for a UL signal performed by the received signal processing section 304, and measurement performed by the measurement section 305. The control section 301 may control scheduling of a data channel (including a DL data channel and/or a UL data channel).

The control section 301 may control a transmission direction of each symbol in a time unit (for example, a slot), which is also used as a scheduling unit of a DL data channel. Specifically, the control section 301 may control generation and/or transmission of slot format-related information (SFI), which indicates a DL symbol and/or a UL symbol in a slot.

The control section 301 may perform control so as to allow configuration of one or more BWPs and to perform wire communication with the user terminal 20 by using such configured BWP(s), by means of TDD (time division duplex) or FDD (frequency division duplex).

The control section 301 may perform control such that DL/UL communication is performed by using at least two activated BWPs. If activation/deactivation control of BWPs using a timer (for example, an inactivity timer) is performed in the user terminal (first aspect), the control section 301 may report a time period (given time period, expiration time) configured for the timer by using higher layer signaling or downlink control signaling addressed to the user terminal. Such information may be an index specifying one of a plurality of time periods configured for the user terminal in advance.

If fallback control is performed in the user terminal (second aspect), the control section 301 may report information indicating correspondence between a plurality of BWPs configured for the user terminal and one or a plurality of default BWPs (or initial BWPs) to the user terminal by using higher layer signaling or downlink control signaling addressed to the user terminal. Such information may be an index specifying one of a plurality of correspondences configured for the user terminal in advance.

If pairing control is performed in the user terminal (third aspect), the control section 301 may report information indicating pairing between a DL BWP and a UL BWP to the user terminal by using higher layer signaling or downlink control signaling addressed to the user terminal. Such information may be an index specifying one of a plurality of pairings configured for the user terminal in advance.

The control section 301 can be constituted with a controller, a control circuit or control apparatus that can be described based on general understanding of the technical field to which the present invention pertains.

The transmission signal generation section 302 may generate a DL signal (including at least one of DL data (channel), DCI, a DL reference signal, and control information carried on higher layer signaling), based on commands from the control section 301, and may output the generated result to the mapping section 303.

The transmission signal generation section 302 can be constituted with a signal generator, a signal generation circuit or signal generation apparatus that can be described based on general understanding of the technical field to which the present invention pertains.

The mapping section 303 maps the DL signals generated in the transmission signal generation section 302 to given radio resources, based on commands from the control section 301, and outputs these to the transmitting/receiving sections 103. For example, the mapping section 303 maps a reference signal to a given radio resource by using a mapping pattern determined by the control section 301.

The mapping section 303 can be constituted with a mapper, a mapping circuit or mapping apparatus that can be described based on general understanding of the technical field to which the present invention pertains.

The received signal processing section 304 performs receiving processes (for example, at least one of demapping, demodulation, and decoding, and so on) for a UL signal transmitted from the user terminal 20. Specifically, the received signal processing section 304 may output a received signal and/or a signal that has been subjected to the receiving processes to the measurement section 305.

The received signal processing section 304 can be constituted with a signal processor, a signal processing circuit or signal processing apparatus that can be described based on general understanding of the technical field to which the present invention pertains. The received signal processing section 304 can constitute the receiving section according to the present invention.

The measurement section 305 may measure UL channel quality, based on reference signal received power (for example, RSRP (Reference Signal Received Power)) and/or received quality (for example, RSRQ (Reference Signal Received Quality)), for example. The measurement results may be output to the control section 301.

### <User Terminal>

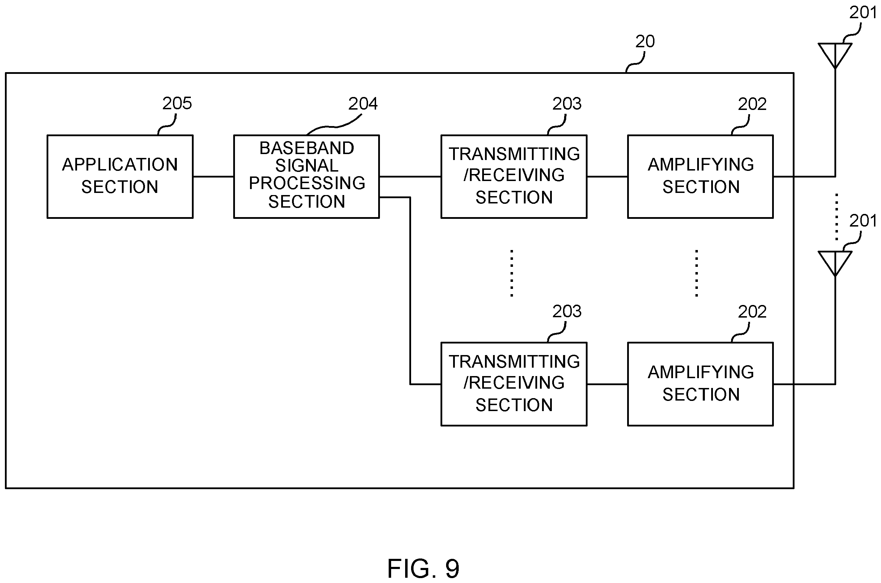

FIG. 9 is a diagram to illustrate an example of an overall structure of the user terminal. A user terminal 20 includes a plurality of transmitting/receiving antennas 201 for MIMO communication, amplifying sections 202, transmitting/receiving sections 203, a baseband signal processing section 204 and an application section 205. The user terminal 20 may constitute a "transmitting apparatus" in the UL, and may constitute a "receiving apparatus" in the DL.

Radio frequency signals that are received in the plurality of transmitting/receiving antennas 201 are each amplified in the amplifying sections 202. Each of the transmitting/receiving sections 203 receives the DL signals amplified in the amplifying sections 202. The transmitting/receiving sections 203 convert the received signals into baseband signals through frequency conversion, and output the baseband signals to the baseband signal processing section 204.

The baseband signal processing section 204 performs, on each input baseband signal, at least one of an FFT process, error correction decoding, a retransmission control receiving process, and so on. The DL data is forwarded to the application section 205. The application section 205 performs processes related to higher layers above the physical layer and the MAC layer, and so on.

Meanwhile, the UL data is input from the application section 205 to the baseband signal processing section 204. The baseband signal processing section 204 performs at least one of a retransmission control process (for example, an HARQ process), channel coding, rate matching, puncturing, a discrete Fourier transform (DFT) process, an IFFT process and so on, and the result is forwarded to each of the transmitting/receiving sections 203. At least one of channel coding, rate matching, puncturing, a DFT process, an IFFT process, and so on is also performed on UCI (for example, at least one of an A/N of a DL signal, channel state information (CSI), and a scheduling request (SR), and so on), and the result is forwarded to each of the transmitting/receiving sections 203.

The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

The transmitting/receiving sections 203 receive a DL signal (for example, at least one of a DL control signal (also referred to as a DL control channel, DCI, or the like), a DL data signal (also referred to as a DL data channel, DL data, or the like), and a reference signal). The transmitting/receiving sections 203 transmit a UL signal (for example, at least one of a UL control signal (also referred to as a UL control channel, UCI, or the like), a UL data signal (also referred to as a UL data channel, UL data, or the like), and a reference signal).

The transmitting/receiving sections 203 may receive higher layer control information (for example, control information carried on MAC CEs and/or RRC signaling).

The transmitting/receiving sections 203 may perform transmission/reception of signals and/or information by using a DL/UL frequency band pair (DL/UL BWP pair) including a frequency band for the UL and a frequency band for the DL configured in the frequency direction in a carrier, by means of TDD (time division duplex).

The transmitting/receiving sections 203 may perform DL/UL communication by using at least two activated BWPs.

The transmitting/receiving sections 203 can be constituted with transmitters/receivers, transmitting/receiving circuits or transmitting/receiving apparatus that can be described based on general understanding of the technical field to which the present invention pertains. Each transmitting/receiving section 203 may be structured as a transmitting/receiving section in one entity, or may be constituted with a transmitting section and a receiving section.

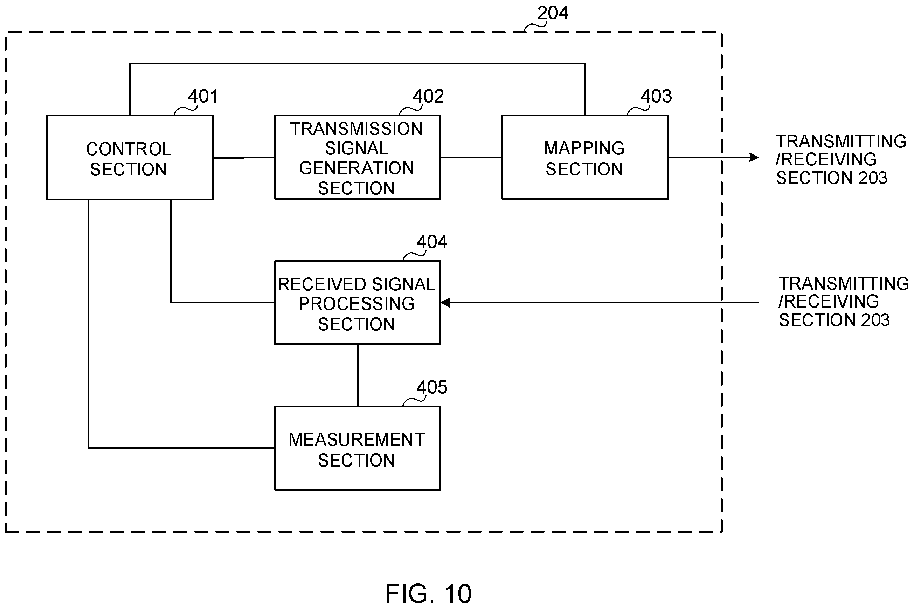

FIG. 10 is a diagram to illustrate an example of a functional structure of the user terminal. Note that FIG. 10 primarily illustrates functional blocks and it is assumed that the user terminal 20 may include other functional blocks that are necessary for radio communication as well. As illustrated in FIG. 10, the baseband signal processing section 204 provided in the user terminal 20 includes a control section 401, a transmission signal generation section 402, a mapping section 403, a received signal processing section 404 and a measurement section 405.

The control section 401 controls the whole of the user terminal 20. The control section 401 controls, for example, at least one of generation of a UL signal performed by the transmission signal generation section 402, mapping of a UL signal performed by the mapping section 403, receiving processes for a DL signal performed by the received signal processing section 404, and measurement performed by the measurement section 405.

The control section 401 may perform control so as to allow configuration of one or more BWPs and to perform wire communication with the radio base station 10 by using such configured BWP(s), by means of TDD (time division duplex) or FDD (frequency division duplex).

The control section 401 may perform control such that DL/UL communication is performed by using at least two activated BWPs. The control section 401 may perform, for example, activation/deactivation of BWPs by using control based on a time period elapsed from completion of use of a data channel in an activated BWP (control using an inactivity-timer), control of switching to a default (or initial) BWP (fallback control), pairing control of BWPs between the DL and the UL, or control achieved by combining two or more types of the control mentioned above.

When the control section 401 performs the control using a timer, the control section 401 may perform the control according to each of the options described in the first aspect. When the control section 401 performs the fallback control, the control section 401 may perform the control according to each of the options described in the second aspect. When the control section 401 performs the pairing control, the control section 401 may perform the control according to each of the options described in the third aspect.

In the control using a timer, the control section 401 may receive a time period (given time period, expiration time) configured for the timer from the network by using higher layer signaling or downlink control signaling addressed to the user terminal. Such information may be an index specifying one of a plurality of time periods configured for the user terminal in advance.

In the fallback control, the control section 401 may receive information indicating correspondence between a plurality of BWPs configured for the user terminal and one or a plurality of default BWPs (or initial BWPs) from the network by using higher layer signaling or downlink control signaling addressed to the user terminal. Such information may be an index specifying one of a plurality of correspondences configured for the user terminal in advance.

In the pairing control, the control section 401 may receive information indicating pairing between a DL BWP and a UL BWP from the network by using higher layer signaling or downlink control signaling addressed to the user terminal. Such information may be an index specifying one of a plurality of pairings configured for the user terminal in advance.

The control section 401 may control the transmitting/receiving sections 203 so as to perform uplink communication and/or downlink communication by using at least two activated frequency bands out of a plurality of frequency bands partially configured in the frequency direction in a carrier, and may also control activation/deactivation of the plurality of frequency bands.

The control section 401 may control the activation/deactivation of the plurality of frequency bands, based on an elapsed time period after transmission or reception of data based on downlink control signaling in the activated frequency bands.

The control section 401 may count the elapsed time period collectively or individually for the activated frequency bands.

When the duration exceeds a given time period, the control section 401 may control the activation/deactivation so that uplink communication and/or downlink communication is performed in a given frequency band out of the plurality of frequency bands.

When at least one of the plurality of frequency bands in an uplink is paired with at least one of the plurality of frequency bands in a downlink, the control section 401 may perform allocation of an ACK/NACK for a downlink signal, based on the pairing.

The control section 401 can be constituted with a controller, a control circuit or control apparatus that can be described based on general understanding of the technical field to which the present invention pertains.

The transmission signal generation section 402 generates a UL signal and retransmission control information of a DL signal (performs, for example, coding, rate matching, puncturing, modulation, and so on), based on commands from the control section 401, and outputs the generated result to the mapping section 403. The transmission signal generation section 402 can be constituted with a signal generator, a signal generation circuit or signal generation apparatus that can be described based on general understanding of the technical field to which the present invention pertains.

The mapping section 403 can be constituted with a mapper, a mapping circuit or mapping apparatus that can be described based on general understanding of the technical field to which the present invention pertains.

The received signal processing section 404 performs receiving processes (for example, at least one of demapping, demodulation, and decoding, and so on) for a DL signal. For example, the received signal processing section 404 may demodulate a DL data channel by using a reference signal of a mapping pattern determined by the control section 401.

The received signal processing section 404 may output a received signal and/or a signal that has been subjected to the receiving processes to the control section 401 and/or the measurement section 405. The received signal processing section 404 outputs, for example, higher layer control information carried on higher layer signaling, L1/L2 control information (for example, a UL grant and/or a DL assignment), and so on to the control section 401.

The received signal processing section 404 can be constituted with a signal processor, a signal processing circuit or signal processing apparatus that can be described based on general understanding of the technical field to which the present invention pertains. The received signal processing section 404 can constitute the receiving section according to the present invention.

The measurement section 405 measures a channel state, based on a reference signal (for example, a CSI-RS) from the radio base station 10, and outputs measured results to the control section 401. Note that measurement of a channel state may be performed for each CC.

The measurement section 405 can be constituted with a signal processor, a signal processing circuit or signal processing apparatus and with a measurer, a measurement circuit or measurement apparatus that can be described based on general understanding of the technical field to which the present invention pertains.

### <Hardware Structure>

Note that the block diagrams that have been used to describe the above embodiments illustrates blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these plurality of pieces of apparatus.

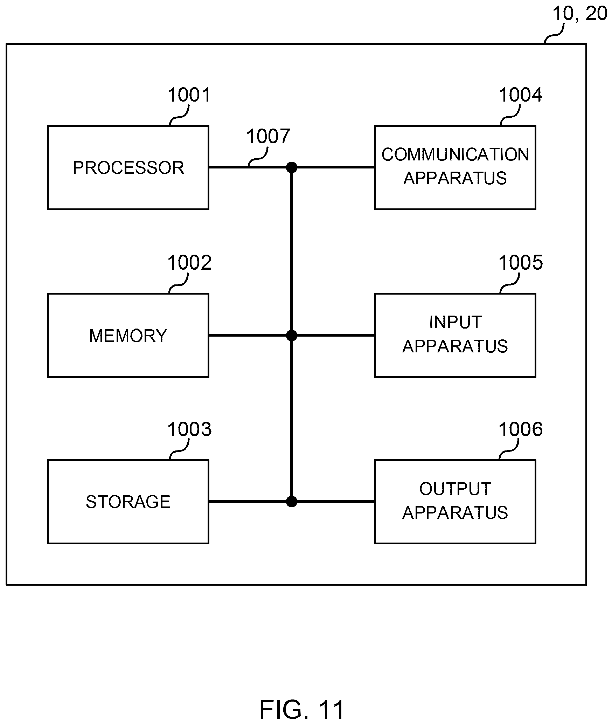

For example, a radio base station, a user terminal, and so on according to the present embodiment may function as a computer that executes the processes of the radio communication method of the present invention. FIG. 11 is a diagram to illustrate an example of a hardware structure of the radio base station and the user terminal. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of apparatuses illustrated in the drawings, or may be designed not to include part of pieces of apparatus.

For example, although only one processor 1001 is illustrated, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from the storage 1003 and/or the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and the like for implementing the radio communication method.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via a wired and/or wireless network, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, frequency division duplex (FDD) and/or time division duplex (TDD). For example, the above-described transmitting/receiving antennas 101 (201), amplifying sections 102 (202), transmitting/receiving sections 103 (203), transmission line interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Further, each of the apparatuses illustrated in FIG. 11 is connected with a bus 1007 for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an ASIC (Application Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology described in this specification and/or the terminology that is needed to understand this specification may be replaced by other terms that convey the same or similar meanings. For example, "channels" and/or "symbols" may be "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

A slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology. A slot may include a plurality of mini-slots. Each mini-slot may be constituted of one or a plurality of symbols in the time domain.

A radio frame, a subframe, a slot, a mini-slot, and a symbol all express time units in signal communication. A radio frame, a subframe, a slot, a mini-slot, and a symbol may each be called by other applicable terms. For example, one subframe may be referred to as a "transmission time interval (TTI)," a plurality of consecutive subframes may be referred to as a "TTI" or one slot or one mini-slot may be referred to as a "TTI." That is, a subframe and/or a TTI may be a subframe (1 ms) in existing LTE, may be a shorter period than 1 ms (for example, 1 to 13 symbols), or may be a longer period than 1 ms.

Here, a TTI refers to the minimum time unit of scheduling in radio communication, for example. For example, in LTE systems, a radio base station schedules the allocation of radio resources (such as a frequency bandwidth and/or transmission power that are available for each user terminal) for the user terminal in TTI units. Note that the definition of TTIs is not limited to this. TTIs may be transmission time units for channel-encoded data packets (transport blocks), or may be the unit of processing in scheduling and/or link adaptation, and so on. Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe" and so on. A TTI that is shorter than a normal TTI may be referred to as a "shortened TTI," a "short TTI," a "partial or fractional TTI," a "shortened subframe," a "short subframe, and so on.

A resource block (RB) is the unit of resource allocation in the time domain and the frequency domain, and may include one or a plurality of consecutive subcarriers in the frequency domain. Also, an RB may include one or a plurality of symbols in the time domain, and may be one slot, one mini-slot, one subframe, or one TTI in length. One TTI and one subframe each may be constituted of one or a plurality of resource blocks. Note that the RB may be referred to as a physical resource block (PRB (Physical RB)), a PRB pair, an RB pair, and so on.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols included in a slot or a mini-slot, the number of subcarriers included in an RB, the number of symbols in a TTI, the symbol length, the cyclic prefix (CP) length, and so on can be variously changed.

Also, the information, parameters, and so on described in this specification may be represented in absolute values or in relative values with respect to given values, or may be represented in another corresponding information. For example, radio resources may be specified by given indices. Further, mathematical formulas and so on using these parameters may be different from those explicitly disclosed in this specification.

The names used for parameters and so on in this specification are in no respect limiting. For example, since various channels (PUCCH (Physical Uplink Control Channel), PDCCH (Physical Downlink Control Channel), and so on) and information elements can be identified by any suitable names, the various names allocated to these various channels and information elements are in no respect limiting.

The information, signals, and so on described in this specification may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers, and/or from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs).

Also, reporting of given information (for example, reporting of "X holds") does not necessarily have to be performed explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using wired technologies (coaxial cables, optical fiber cables, twisted-pair cables, digital subscriber lines (DSL), and so on) and/or wireless technologies (infrared radiation, microwaves, and so on), these wired technologies and/or wireless technologies are also included in the definition of communication media.

The terms "system" and "network" used in this specification can be used interchangeably.

In the present specification, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of a base station and/or a base station subsystem that provides communication services within this coverage.

In the present specification, the terms "mobile station (MS)," "user terminal," "user equipment (UE)," and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, the user terminals 20 may have the functions of the radio base stations 10 described above. In addition, "uplink" and/or "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Specific actions which have been described in this specification to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts, and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and/or next-generation systems that are enhanced based on these.

The phrase "based on" (or "on the basis of") as used in this specification does not mean "based only on" (or "only on the basis of"), unless otherwise specified. In other words, the phrase "based on" (or "on the basis of") means both "based only on" and "based at least on" ("only on the basis of" and "at least on the basis of').

Reference to elements with designations such as "first," "second" and so on as used herein does not generally limit the quantity or order of these elements. These designations may be used herein only for convenience, as a method for distinguishing between two or more elements. Thus, reference to the first and second elements does not imply that only two elements may be employed, or that the first element must precede the second element in some way.

The term "judging (determining)" as used herein may encompass a wide variety of actions. For example, "judging (determining)" may be interpreted to mean making "judgments (determinations)" about calculating, computing, processing, deriving, investigating, looking up, (for example, searching a table, a database, or some other data structures), ascertaining, and so on. Furthermore, "judging (determining)" may be interpreted to mean making "judgments (determinations)" about receiving (for example, receiving information), transmitting (for example, transmitting information), input, output, accessing (for example, accessing data in a memory), and so on. In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

The terms "connected" and "coupled," or any variation of these terms as used herein mean all direct or indirect connections or coupling between two or more elements, and may include the presence of one or more intermediate elements between two elements that are "connected" or "coupled" to each other. The coupling or connection between the elements may be physical, logical, or a combination thereof. In the case of being used in this specification, two elements may be considered "connected" or "coupled" to each other by using one or more electrical wires, cables and/or printed electrical connections, and, as some non-limiting and non-inclusive examples, by using electromagnetic energy such as electromagnetic energy having wavelengths in radio frequency regions, microwave regions and (both visible and invisible) optical regions.

When terms such as "including," "comprising," and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described in this specification. The present invention can be implemented with various corrections and in various modifications, without departing from the scope of the present invention defined by the recitations of claims Consequently, the description in this specification is provided only for the purpose of explaining examples, and should by no means be construed to limit the present invention in any way.

## Claims

1. A terminal comprising:
a transmitting section configured to perform uplink transmission by an active bandwidth part, BWP; and
a control section configured to utilize an active first BWP in an uplink and an active second BWP in a supplementary uplink for the uplink transmission,
**characterized in that** the active first BWP and the active second BWP are configured as initial active BWPs using higher layer signaling.

2. A radio communication method for a terminal, the method comprising:
performing uplink transmission by an active bandwidth part, BWP; and
utilizing an active first BWP in an uplink and an active second BWP in a supplementary uplink for the uplink transmission,
**characterized in that** the active first BWP and the active second BWP are configured as initial active BWPs using higher layer signaling.

3. A base station comprising:
a receiving section configured to receive uplink transmission from a terminal by an active bandwidth part, BWP; and
a control section configured to utilize an active first BWP in an uplink and an active second BWP in a supplementary uplink for reception of the uplink transmission,
**characterized in that** the active first BWP and the active second BWP are configured as initial active BWPs using higher layer signaling.

4. A system comprising:
a terminal comprising:
a transmitting section configured to perform uplink transmission by an active bandwidth part, BWP; and
a control section configured to utilize an active first BWP in an uplink and an active second BWP in a supplementary uplink for the uplink transmission;
**characterized in that** the active first BWP and the active second BWP are configured as initial active BWPs using higher layer signaling, and
a base station comprising:
a control section configured to utilize the active first BWP and the active second BWP for reception of the uplink transmission performed by the terminal.

## Patentansprüche

1. Endgerät, umfassend:
einen Übertragungsabschnitt, der konfiguriert ist, um eine Uplink-Übertragung durch einen aktiven Bandbreitenteil, BWP, durchzuführen; und
einen Steuerabschnitt, der konfiguriert ist, um einen aktiven ersten BWP in einem Uplink und einen aktiven zweiten BWP in einem zusätzlichen Uplink für die Uplink-Übertragung zu verwenden,
**dadurch gekennzeichnet, dass** der aktive erste BWP und der aktive zweite BWP als anfängliche aktive BWPs konfiguriert sind, die eine Signalisierung in einer höheren Schicht verwenden.

2. Funkkommunikationsverfahren für ein Endgerät, wobei das Verfahren folgendes umfasst:
Durchführen einer Uplink-Übertragung durch einen aktiven Bandbreitenteil, BWP; und
Verwenden eines aktiven ersten BWP in einem Uplink und eines aktiven zweiten BWP in einem zusätzlichen Uplink für die Uplink-Übertragung,
**dadurch gekennzeichnet, dass** der aktive erste BWP und der aktive zweite BWP als anfängliche aktive BWPs konfiguriert sind, die eine Signalisierung in einer höheren Schicht verwenden.

3. Basisstation, umfassend:
einen Empfangsabschnitt, der konfiguriert ist, um eine Uplink-Übertragung von einem Endgerät durch einen aktiven Bandbreitenteil, BWP, zu empfangen; und
einen Steuerabschnitt, der konfiguriert ist, um einen aktiven ersten BWP in einem Uplink und einen aktiven zweiten BWP in einem zusätzlichen Uplink für den Empfang der Uplink-Übertragung zu verwenden, **dadurch gekennzeichnet, dass** der aktive erste BWP und der aktive zweite BWP als anfängliche aktive BWPs konfiguriert sind, die eine Signalisierung in einer höheren Schicht verwenden.

4. System, umfassend:
ein Endgerät, umfassend:
einen Übertragungsabschnitt, der konfiguriert ist, um eine Uplink-Übertragung durch einen aktiven Bandbreitenteil, BWP, durchzuführen; und
einen Steuerabschnitt, der konfiguriert ist, um einen aktiven ersten BWP in einem Uplink und einen aktiven zweiten BWP in einem zusätzlichen Uplink für die Uplink-Übertragung zu verwenden;
**dadurch gekennzeichnet, dass** der aktive erste BWP und der aktive zweite BWP als anfängliche aktive BWPs konfiguriert sind, die eine Signalisierung in einer höheren Schicht verwenden, und
eine Basisstation, umfassend:
einen Steuerabschnitt, der konfiguriert ist, um den aktiven ersten BWP und den aktiven zweiten BWP für den Empfang der von dem Endgerät durchgeführten Uplink-Übertragung zu verwenden.

## Revendications

1. Terminal comprenant :
une section de transmission configurée pour effectuer une transmission de liaison montante par une partie de bande passante, BWP, active ; et
une section de commande configurée pour utiliser une première BWP active dans une liaison montante et une seconde BWP active dans une liaison montante supplémentaire pour la transmission de liaison montante,
**caractérisé en ce que** la première BWP active et la seconde BWP active sont configurées comme des BWP actives initiales en utilisant une signalisation de couche supérieure.

2. Procédé de radiocommunication pour un terminal, le procédé comprenant :
une réalisation d'une transmission de liaison montante par une partie de bande passante, BWP, active ; et
une utilisation d'une première BWP active dans une liaison montante et d'une seconde BWP active dans une liaison montante supplémentaire pour la transmission de liaison montante,
**caractérisé en ce que** la première BWP active et la seconde BWP active sont configurées comme des BWP actives initiales en utilisant une signalisation de couche supérieure.

3. Station de base comprenant :
une section de réception configurée pour recevoir une transmission de liaison montante à partir d'un terminal par une partie de bande passante, BWP, active ; et
une section de commande configurée pour utiliser une première BWP active dans une liaison montante et une seconde BWP active dans une liaison montante supplémentaire pour une réception de la transmission de liaison montante,
**caractérisé en ce que** la première BWP active et la seconde BWP active sont configurées comme des BWP actives initiales en utilisant une signalisation de couche supérieure.

4. Système comprenant :
un terminal comprenant :
une section de transmission configurée pour effectuer une transmission de liaison montante par une partie de bande passante, BWP, active ; et
une section de commande configurée pour utiliser une première BWP active dans une liaison montante et une seconde BWP active dans une liaison montante supplémentaire pour la transmission de liaison montante ;
**caractérisé en ce que** la première BWP active et la seconde BWP active sont configurées comme des BWP actives initiales en utilisant une signalisation de couche supérieure, et
une station de base comprenant :
une section de commande configurée pour utiliser la première BWP active et la seconde BWP active pour une réception de la transmission de liaison montante effectuée par le terminal.
